# EUROPÄISCHE PATENTANMELDUNG

(11) **EP 3 835 036 A1**
(43) Veröffentlichungstag der Anmeldung: **16.06.2021**
(21) Anmeldenummer: 19216222.0
(22) Anmeldetag: 13.12.2019
(51) Int. Cl.: B29C 65/48, B29C 65/78, F16B 11/00, C09J 5/00, B62D 27/02

(54) **VORFIXIERUNG ZWEIER SUBSTRATE**

(71) Anmelder: SIKA TECHNOLOGY AG, 6340 Baar (CH)
(72) Erfinder: Munzinger, Noah, 8047 Zürich (CH)
(74) Vertreter: Sika Patent Attorneys

(57) **Zusammenfassung**

Ein System zweier vorfixierter Substrate umfasst ein erstes Substrat und ein zweites Substrat. Die Substrate haben jeweils eine Öffnung in einem Überlappungsbereich. Ein Klebstoff ist zwischen den Überlappungsbereichen angeordnet, wobei der Klebstoff sowohl die Substrate miteinander verbindet als auch zumindest teilweise in den Öffnungen angeordnet ist. Im Bereich der Öffnungen ist der Klebstoff lokal ausgehärtet, wobei sich ein ausgehärteter Teilbereich des Klebstoffs von der ersten Öffnung bis in die zweite Öffnung erstreckt. Ein zweiter Teilbereich des Klebstoffs ist dabei nicht ausgehärtet.

## Beschreibung

Die vorliegende Erfindung betrifft ein System zweier vorfixierter Substrate sowie ein Verfahren zur Vorfixierung zweier Substrate.

Im Automobilrohbau sind verschiedenartige Verbindungen zwischen Substraten erforderlich. Unter anderem gibt es Klebeverbindungen, welche zusätzlich mechanisch fixiert werden, bevor der Klebstoff ausgehärtet ist. Solche zusätzlichen mechanischen Fixierungen können beispielsweise durch Punktschweissen, Nieten oder Clinchen bereitgestellt werden. Diese mechanischen Fixierungen dienen dazu, Substrate zusammenzuhalten, bevor der Klebstoff in einem Lackierofen ausgehärtet wird.

Dabei haben diese zusätzlichen mechanischen Fixierungen jedoch den Nachteil, dass dadurch die Substrate kleine Beschädigungen erfahren, welche sich negativ auf eine Dauerfestigkeit der Verbindung auswirken können. Somit besteht eine Bestrebung, solche mechanischen Fixierungen zu vermeiden bzw. durch eine alternative Lösung zu ersetzen.

Um dies zu erreichen, wurde unter anderem vorgeschlagen, auf solche mechanischen Vorfixierungen zu verzichten und stattdessen den Klebstoff punktuell auszuhärten, um die zu fügenden Substrate vorzufixieren. Durch solche punktuellen Aushärtungen soll eine genügend gute Vorfixierung erreicht werden, um die Substrate zusammenzuhalten, bevor der Klebstoff im Lackierofen vollständig ausgehärtet wird.
Ein solches System mit punktuell ausgehärteten Klebepunkten ist beispielsweise in der WO 2018/109045 A1 beschrieben.

Es hat sich jedoch gezeigt, dass insbesondere eine Hochtemperaturhaftung von solchen punktuell ausgehärteten Klebepunkten für viele Anwendungen nicht ausreichend hoch ist. Insbesondere in Lackieröfen, in welchen typischerweise Temperaturen von ungefähr 180°C vorherrschen, ist eine Haftung solcher punktuell ausgehärteter Klebepunkte oftmals zu gering auf den Substraten.

Es besteht somit ein Bedarf, solche Klebeverbindungen, welche ohne mechanische Vorfixierungen auskommen, insbesondere hinsichtlich einer Hochtemperaturhaftung zu verbessern.

Der vorliegenden Erfindung liegt daher die Aufgabe zugrunde, eine verbesserte Vorfixierung von Substraten bereitzustellen, welche insbesondere im Automobilrohbau eingesetzt werden, wobei einerseits auf zusätzliche mechanische Vorfixierungen verzichtet werden können soll, und wobei andererseits eine verbesserte Hochtemperaturhaftung gewährleistet werden soll. Eine solche Vorfixierung soll zudem einfach in bestehende Prozessschritte eingebaut werden können, sowie kostengünstig ausgeführt werden können.

Zur Lösung dieser Aufgabe wird zunächst ein System zweier vorfixierter Substrate vorgeschlagen. Dieses System umfasst: ein erstes Substrat mit einer ersten Öffnung in einem ersten Überlappungsbereich; ein zweites Substrat mit einer zweiten Öffnung in einem zweiten Überlappungsbereich; und einen Klebstoff, welcher zwischen den Überlappungsbereichen des ersten Substrats und des zweiten Substrats angeordnet ist, wobei der Klebstoff sowohl die Substrate miteinander verbindet als auch zumindest teilweise in den Öffnungen angeordnet ist; wobei der Klebstoff in einem Bereich der Öffnungen lokal ausgehärtet ist, wobei sich ein ausgehärteter erster Teilbereich des Klebstoffs von der ersten Öffnung bis in die zweite Öffnung erstreckt und wobei ein zweiter Teilbereich des Klebstoffs unausgehärtet ist.

Das hier vorgeschlagene System bietet zunächst den Vorteil, dass durch die Öffnungen in den Substraten eine verbesserte Verbindung zwischen Substrat und Klebstoff erreicht werden kann. Dabei bindet der Klebstoff auch innerhalb der Öffnung an das Substrat, wodurch eine verbesserte Anbindung erzielt werden kann, indem verschiedene räumliche Ausrichtungen von Klebeflächen ermöglicht werden.

Indem nun im Bereich der Öffnungen der Klebstoff lokal ausgehärtet wird, entsteht ein ausgehärteter Teilbereich des Klebstoffs, welcher sich von der Öffnung eines Substrats bis zur Öffnung des anderen Substrats erstreckt. Somit entsteht gewissermassen ein Stift bzw. ein Bolzen, welcher die beiden Substrate gegen eine Verschiebung sichert. In Versuchen konnte gezeigt werden, dass durch eine solche zusätzliche Verankerung des ausgehärteten Teilbereichs des Klebstoffs in Öffnungen der Substrate eine wesentlich bessere Hochtemperaturhaftung erreicht werden kann, als dies ohne solche Öffnungen der Fall ist.

Weiterhin hat das hier vorgeschlagene System den Vorteil, dass ohne zusätzliche mechanische Fixierungen eine Vorfixierung zweier Fügepartner gewährleistet werden kann. Dadurch erfolgt keine unerwünschte Schwächung hinsichtlich einer Festigkeit der gefügten Fügepartner.

Ein weiterer Vorteil des hier vorgeschlagenen Systems ist darin zu sehen, dass der Klebstoff durch das Vorsehen von Öffnungen besser zugänglich wird für die lokale Aushärtung. Somit können verschiedene Aushärtungssysteme eingesetzt werden, das heisst, neben hitzehärtbaren Klebstoffen können beispielsweise auch Klebstoffe eingesetzt werden, welche durch Strahlung ausgehärtet werden, denn der Klebstoff ist im Unterschied zu bekannten Systemen von aussen her zugänglich aufgrund der Öffnungen.

In einer beispielhaften Ausführungsform sind die erste Öffnung und die zweite Öffnung zumindest teilweise überlappend angeordnet.

In einer beispielhaften Weiterbildung sind die erste Öffnung und die zweite Öffnung im Wesentlichen vollständig überlappend angeordnet.

Eine solche überlappende bzw. teilweise überlappende Anordnung der Öffnungen hat den Vorteil, dass dadurch ein möglichst kleiner Teil des Klebstoffs lokal ausgehärtet werden muss, um die gewünschte Wirkung zu entfalten. Dabei kann bei einer vollständigen Überlappung ein gerader Stift bzw. Bolzen ausgebildet werden, welcher sowohl in die erste Öffnung als auch in die zweite Öffnung hineinragt und so die beiden Substrate miteinander verankert.

In einer beispielhaften Ausführungsform beträgt eine Breite der Überlappungen von 5 mm bis 40 mm, bevorzugt von 10 mm bis 30 mm, besonders bevorzugt von 10 mm bis 20 mm.

In einer beispielhaften Ausführungsform beträgt ein maximaler Durchmesser der Öffnungen, gemessen an einer Oberfläche der Substrate, welche jeweils von dem anderen Substrat weg gewandt ist, von 1 mm bis 20 mm, bevorzugt von 2 mm bis 10 mm, besonders bevorzugt von 2 mm bis 8 mm.

In einer beispielhaften Ausführungsform beträgt ein maximaler Durchmesser der Öffnungen, gemessen an einer Oberfläche der Substrate, welche jeweils vom anderen Substrat weg gewandt ist, von 20 bis 80%, bevorzugt von 30 bis 70%, besonders bevorzugt von 40 bis 60% der Breite der Überlappungen.

Die genannten Dimensionierungen der Überlappungen und der Öffnungen haben sich als besonders vorteilhaft im Zusammenhang mit dieser Erfindung erwiesen.

In einer beispielhaften Ausführungsform haben die Öffnungen eine im Wesentlichen runde, ovale, rechteckige, vieleckige oder viereckige Form.

In einer beispielhaften Ausführungsform hat zumindest eine Öffnung einen Hinterschnitt, wobei sich die Öffnung gegen eine Seite des Substrats, welche dem Klebstoff zugewandt ist, verjüngt.

In einer beispielhaften Weiterbildung haben beide Öffnungen einen solchen Hinterschnitt.

Das Vorsehen eines solchen Hinterschnitts bietet den Vorteil, dass dadurch eine noch bessere mechanische Verankerung erzielt werden kann. Dabei sind die Substrate nicht nur gegen eine Verschiebung in einer Ebene der Substrate gesichert, sondern auch gegen eine Verschiebung senkrecht zur Ebene der Substrate.

In einer beispielhaften Ausführungsform füllt der Klebstoff zumindest eine Öffnung vollständig aus.

In einer beispielhaften Weiterbildung überragt der Klebstoff an einer Oberfläche zumindest eines Substrats, welche vom anderen Substrat weggewandt ist, die Öffnung.

Ein solches vollständiges Ausfüllen bzw. Überfüllen der Öffnungen mit Klebstoff hat den Vorteil, dass eine verbesserte mechanische Verankerung erzielt werden kann. Insbesondere bei einer leichten Überfüllung der Öffnungen kann eine ähnliche Wirkung erzielt werden, wie sie mit den hinterschnittenen Öffnungen erzielbar ist. Durch den herausquellenden Klebstoff wird eine mechanische Verankerung erzielt, welche ein Verschieben der Substrate senkrecht zu einer Ebene der Substrate verhindert.

In einer beispielhaften Weiterbildung ragt der Klebstoff um höchstens 5 mm, bevorzugt um höchstens 3 mm, besonders bevorzugt um höchstens 1 mm, über die Öffnung auf einer Oberfläche eines Substrates, welche vom anderen Substrat weggewandt ist.

In einer beispielhaften Ausführungsform beträgt der erste ausgehärtete Teilbereich des Klebstoffs höchstens 30% des gesamten Klebstoffvolumens, bevorzugt höchstens 25%, bevorzugt höchstens 20%, bevorzugt höchstens 15%, besonders bevorzugt höchstens 10%.

Je weniger Klebstoff in Bezug auf das gesamte Klebstoffvolumen lokal ausgehärtet werden muss, desto effizienter und kostengünstiger kann ein solches System ausgestaltet werden.

In einer beispielhaften Ausführungsform haben die Substrate jeweils mehrere Öffnungen, wobei jeweils eine Öffnung im ersten Substrat einer Öffnung im zweiten Substrat zugeordnet ist.

Je nach Grösse und Beschaffenheit der verwendeten Substrate kann eine verschiedene Anzahl von Löchern je Substrat gewählt werden.

In einer beispielhaften Weiterbildung sind die Öffnungen fortlaufend in den Überlappungsbereichen der Substrate angeordnet. Beispielsweise kann eine solche Abfolge der Öffnungen in den Substraten dabei jeweils einer Kante der Substrate folgen, welche den Abschluss der Überlappungsbereiche bildet.

In einer beispielhaften Ausführungsform ist der Klebstoff ein einkomponentiger Klebstoff.

In einer beispielhaften Ausführungsform ist der Klebstoff ein epoxidbasierter oder ein polyurethanbasierter Klebstoff.

In einer beispielhaften Ausführungsform hat der Klebstoff eine Viskosität von 500 bis 5000 Pas, bevorzugt von 800 bis 4000 Pas, besonders bevorzugt von 1000 Pas bis 3500 Pas.

Viskositätsmessungen an den Klebstoffen erfolgten 1d nach Herstellung auf einem Rheometer vom Typ MCR 101 des Herstellers Anton Paar oszillatorisch unter Verwendung einer Platten-Platten Geometrie bei einer Temperatur von 25°C mit folgenden Parametern: 5 Hz Frequenz, 1 mm Spalt, 25 mm Plattendurchmesser, 1% Deformation.

In einer beispielhaften Ausführungsform hat der Klebstoff eine Glasübergangstemperatur (Tg) von zumindest 80°C, bevorzugt von zumindest 100°C, bevorzugt von zumindest 120°C, besonders bevorzugt von zumindest 150°C.

In einer beispielhaften Ausführungsform ist der Klebstoff ein hitzehärtbarer Klebstoff.

In einer alternativen Ausführungsform ist der Klebstoff ein durch Strahlung, insbesondere UV-Strahlung, aushärtbarer Klebstoff.

Im Allgemeinen können zur Ausführung dieser Erfindung insbesondere Klebstoffe verwendet werden, wie sie in der WO 2018/109045 A1 beschrieben sind.

Beispielsweise kann zur Ausführung dieser Erfindung ein Klebstoff verwendet werden, welcher unter dem Handelsnamen SikaPower®-498 von Sika vertrieben wird. Ein weiterer verwendbarer Klebstoff im Zusammenhang dieser Erfindung wird unter dem Handelsnamen Betamate® 1480 von Dow vertrieben.

In einer beispielhaften Ausführungsform sind die Substrate aus Metall und/oder aus Kunststoffen gebildet. In einer beispielhaften Ausführungsform sind die Substrate aus Stahlblech oder aus Aluminiumblech gebildet. In einer alternativen beispielhaften Ausführungsform sind die Substrate aus Karbon oder aus anderen Kunststoffen gebildet.

In einer beispielhaften Ausführungsform sind die Substrate Bestandteile einer Karosserie, insbesondere einer Kraftfahrzeugkarosserie.

Die eingangs gestellte Aufgabe wird zudem gelöst durch ein Verfahren zur Vorfixierung zweier Substrate. Das Verfahren umfasst dabei die Schritte: Bereitstellen eines ersten Substrats mit einer ersten Öffnung in einem ersten Überlappungsbereich, eines zweiten Substrats mit einer zweiten Öffnung in einem zweiten Überlappungsbereich, und eines Klebstoffs; Anordnen des Klebstoffs zwischen den Überlappungsbereichen des ersten Substrats und des zweiten Substrats, so dass der Klebstoff sowohl die Substrate verbindet als auch zumindest teilweise in den Öffnungen angeordnet ist; und lokales Aushärten des Klebstoffs in einem Bereich der Öffnungen, so dass ein ausgehärteter erster Teilbereich des Klebstoffs gebildet wird, welcher sich von der ersten Öffnung bis in die zweite Öffnung erstreckt, wobei ein zweiter Teilbereich des Klebstoffs unausgehärtet bleibt.

In einer beispielhaften Ausführungsform wird beim Anordnen des Klebstoffs der Klebstoff zunächst auf einem Überlappungsbereich eines Substrats angeordnet, sodann das andere Substrat mit dessen Überlappungsbereich auf dem Klebstoff angeordnet, und dann die beiden Substrate gegeneinander bewegt, so dass der Klebstoff zumindest teilweise in die Öffnungen gedrückt wird.

In einer beispielhaften Ausführungsform wird beim lokalen Aushärten eine Hitze oder eine Strahlung, insbesondere eine UV-Strahlung, im Bereich der Öffnungen angewendet.

In einer beispielhaften Ausführungsform umfasst das Verfahren den weiteren Schritt: Beschichten der Substrate, bevor der Klebstoff vollständig ausgehärtet wird.

In einer beispielhaften Ausführungsform wird das Verfahren mit einem System gemäss obiger Beschreibung durchgeführt.

Nachfolgend wird die Erfindung beispielhaft anhand von schematischen Zeichnungen näher erläutert.

Es zeigen:
- Fig. 1a bis 1c: ein beispielhaftes System zweier vorfixierter Substrate;
- Fig. 2: eine weitere Ausführungsform eines beispielhaften Systems zweier vorfixierter Substrate;
- Fig. 3: eine weitere Ausführungsform eines Systems zweier vorfixierter Substrate; und
- Fig. 4: eine perspektivische Darstellung eines beispielhaften Systems zweier vorfixierter Substrate.

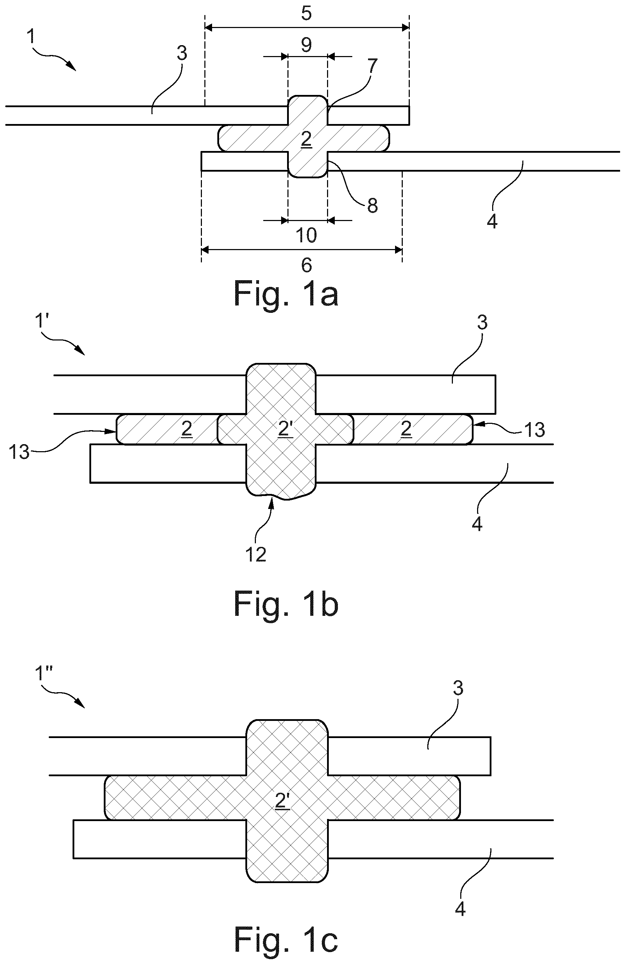

In den Fig. 1a bis 1c ist ein erstes Ausführungsbeispiel eines Systems 1, 1', 1" zweier vorfixierter Substrate 3, 4 beispielhaft und schematisch dargestellt. Dabei zeigt die Fig. 1a das nicht vorfixierte System 1, die Fig. 1b zeigt das vorfixierte System 1', und die Fig. 1c zeigt das befestigte System 1".

Das erste Substrat 3 hat einen ersten Überlappungsbereich 5, in welchem eine erste Öffnung 7 angeordnet ist. Das zweite Substrat 4 hat einen zweiten Überlappungsbereich 6, in welchem eine zweite Öffnung 8 angeordnet ist. Dabei sind die Substrate 3, 4 derart zueinander positioniert, dass die jeweiligen Überlappungsbereiche 5, 6 vollständig überlappen. In diesem Ausführungsbeispiel sind die Substrate 3, 4 zudem derart relativ zueinander angeordnet, dass sich auch die erste Öffnung 7 und die zweite Öffnung 8 überlappen. Die erste Öffnung 7 hat einen Durchmesser 9, und die zweite Öffnung 8 hat einen Durchmesser 10, wobei die Durchmesser 9, 10 der Öffnungen 7, 8 jeweils auf einer Seite des Substrats 3, 4 gemessen werden, welche dem jeweils anderen Substrat 3, 4 abgewandt ist.

Im nicht vorfixierten System 1, welches in Fig. 1a dargestellt ist, liegt der Klebstoff 2 vollständig nicht ausgehärtet vor.
Im vorfixierten System 1', welches in der Fig. 1b abgebildet ist, liegt der Klebstoff 2 teilweise als unausgehärteter Klebstoff 2 und teilweise als ausgehärteter Klebstoff 2' vor. Dabei ist der Klebstoff in einem ersten Teilbereich 12 ausgehärtet und in einem zweiten Teilbereich 13 nicht ausgehärtet. Dieser erste Teilbereich 12 mit dem ausgehärteten Klebstoff 2' erstreckt sich von der ersten Öffnung 7 des ersten Substrats 3 bis in die zweite Öffnung 8 des zweiten Substrats 4. Dadurch wird gewissermassen ein Stift bzw. Bolzen aus ausgehärtetem Klebstoff 2' gebildet, welcher die Substrate 3, 4 gegen eine Verschiebung sichert. In diesem Ausführungsbeispiel ist nicht der gesamte Querschnitt auf einer Höhe der Öffnungen 7, 8 ausgehärtet. In alternativen Ausführungsbeispielen kann jedoch auch der gesamte Querschnitt auf der Höhe der Öffnungen 7, 8 ausgehärtet sein, wobei der nicht ausgehärtete zweite Teilbereich 12 dann weiter entfernt von den Öffnungen 7, 8 zu liegen kommt und daher auf einer solchen Querschnittsdarstellung nicht ersichtlich wäre.
Schliesslich liegt im befestigten System 1", gezeigt in Fig. 1c, der Klebstoff 2' vollständig als ausgehärteter Klebstoff vor. Dieser Zustand liegt beispielsweise nach einer Behandlung des Systems in einem Lackierofen vor.

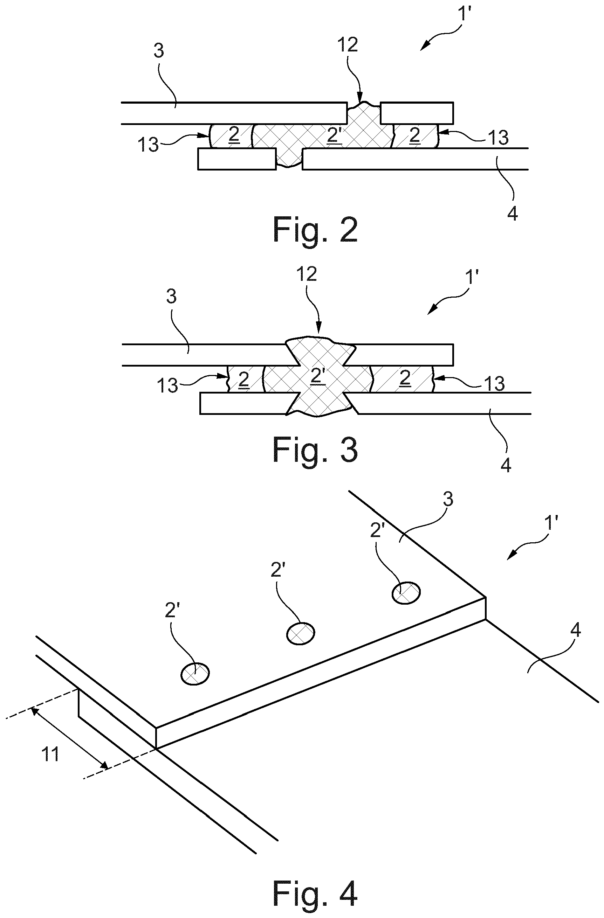

In Fig. 2 ist eine weitere beispielhafte Ausführungsform eines vorfixierten Systems 1' dargestellt. Im Unterschied zum System 1' in der Fig. 1b sind in diesem Ausführungsbeispiel gemäss Fig. 2 die Öffnungen 7 und 8 der Substrate 3, 4 nicht deckungsgleich bzw. überlappend angeordnet. Somit bildet der erste Teilbereich 12 mit dem ausgehärteten Klebstoff 2' nicht eine Verankerung mit einer I-förmigen Form, sondern es entsteht ein Teilbereich 12, welcher eher eine Z-förmige Gestalt aufweist. Zudem sind die Öffnungen in diesem Beispiel nicht vollständig ausgefüllt mit Klebstoff 2, 2', sondern nur teilweise.

In Fig. 3 ist eine weitere beispielhafte Ausführungsform schematisch dargestellt, wobei das vorfixierte System 1' Öffnungen mit einem Hinterschnitt aufweist. Dabei ist der Hinterschnitt derart ausgebildet, dass die Öffnungen jeweils an einer dem Klebstoff 2, 2' abgewandten Seite grösser sind als an einer dem Klebstoff 2, 2' zugewandten Seite, so dass sich die Öffnungen zur Klebstoff 2, 2' zugewandten Seite hin verjüngen. Dadurch entsteht eine zusätzliche Verankerung des ersten Teilbereichs 12 mit dem ausgehärteten Klebstoff 2' in den jeweiligen Substraten 3, 4.

In Fig. 4 ist schliesslich eine räumliche Darstellung eines vorfixierten Systems 1' gezeigt. Dabei ist ersichtlich, dass sich das erste Substrat 3 und das zweite Substrat 4 überlappen, wobei in diesem Überlappungsbereich jeweils Öffnungen angeordnet sind. Der Überlappungsbereich weist zudem eine Breite 11 auf. In diesem Ausführungsbeispiel umfassen die Substrate 3, 4 jeweils drei Öffnungen, wobei jeweils eine Öffnung des ersten Substrats 3 einer Öffnung des zweiten Substrats 4 zugeordnet ist. In diesem Ausführungsbeispiel sind die Öffnungen jeweils gleichmässig von einer Kante der Substrate 3, 4 beabstandet.

In nachfolgender Tabelle 1 ist eine Versuchsanordnung dargestellt, mit welcher ein Effekt hinsichtlich Zugscherfestigkeit des hier vorgeschlagenen Systems untersucht wurde. Dabei wurde die Zugscherfestigkeit in MPa gemessen, in jeweils drei unterschiedlichen Substrattypen (ohne Öffnung; mit einer Öffnung mit einem Durchmesser von 2 mm; mit einer Öffnung mit einem Durchmesser von 4 mm) und bei jeweils drei unterschiedlichen Temperaturen (bei 23°C; bei 80°C; bei 180°C). Als Klebstoff wurde SikaPower®-497 verwendet. Als Substrate wurden Stahlsubstrate mit den Abmessungen 100 x 25 x 1.2 mm. Die Substrate wurden mit Anticorit PL3802-39S, 3 g/m² beölt. Die Klebeflächen betrugen jeweils 25 x 10 x 0.3 mm. Die Zuggeschwindigkeit betrug 10 mm/min. Der Klebstoff wurde jeweils für 35 Minuten bei 175°C vorgehärtet.

**Tabelle 1: Zugscherfestigkeit in MPa verschiedener Substrate bei verschiedenen Temperaturen**

| Temperatur | Keine Öffnung | Öffnung mit 2 mm Durchmesser | Öffnung mit 4 mm Durchmesser |
|---|---|---|---|
| 23°C | 30.4 ± 0.4 | 30.3 ± 0.4 | 30.8 ± 0.8 |
| 80°C | 20.6 ± 0.1 | 21.2 ± 1.0 | 20.7 ± 0.9 |
| 180°C | 1.9 ± 0.2 | 2.3 ± 0.2 | 2.9 ± 0.2 |

Aus diesem Versuch geht hervor, dass die Substrate mit Öffnungen, in welchen der Klebstoff einen ausgehärteten Stift bildet zwischen den Öffnungen, eine verbesserte Hochtemperaturhaftung (vgl. Werte bei 180°C) aufweisen als die Substrate ohne Öffnungen. Bei tieferen Temperaturen (vgl. Werte bei 23°C und 80°C) ist ein solcher Effekt weniger stark bzw. nicht ausgeprägt.

### Bezugszeichenliste

- 1: nicht vorfixiertes System
- 1': vorfixiertes System
- 1": befestigtes System
- 2: unausgehärteter Klebstoff
- 2': ausgehärteter Klebstoff
- 3: erstes Substrat
- 4: zweites Substrat
- 5: erster Überlappungsbereich
- 6: zweiter Überlappungsbereich
- 7: erste Öffnung
- 8: zweite Öffnung
- 9: Durchmesser der ersten Öffnung
- 10: Durchmesser der zweiten Öffnung
- 11: Breite der Überlappungsbereiche
- 12: erster Teilbereich des Klebstoffs
- 13: zweiter Teilbereich des Klebstoffs

## Patentansprüche

1. System (1') zweier vorfixierter Substrate (3, 4), das System (1') umfassend:
ein erstes Substrat (3) mit einer ersten Öffnung (7) in einem ersten Überlappungsbereich (5);
ein zweites Substrat (4) mit einer zweiten Öffnung (8) in einem zweiten Überlappungsbereich (6); und
einen Klebstoff (2), welcher zwischen den Überlappungsbereichen (5, 6) des ersten Substrats (3) und des zweiten Substrats (4) angeordnet ist, wobei der Klebstoff (2) sowohl die Substrate (3, 4) miteinander verbindet als auch zumindest teilweise in den Öffnungen (7, 8) angeordnet ist;
wobei der Klebstoff (2, 2') in einem Bereich der Öffnungen (7, 8) lokal ausgehärtet ist, wobei sich ein ausgehärteter erster Teilbereich (12) des Klebstoffs (2') von der ersten Öffnung (7) bis in die zweite Öffnung (8) erstreckt und wobei ein zweiter Teilbereich (13) des Klebstoffs (2) unausgehärtet ist.

2. System (1') nach Anspruch 1, wobei die erste Öffnung (7) und die zweite Öffnung (8) zumindest teilweise überlappend zueinander angeordnet sind.

3. System (1') nach einem der vorhergehenden Ansprüche, wobei eine Breite (11) der Überlappungsbereiche (5, 6) von 5 mm bis 40 mm beträgt.

4. System (1') nach einem der vorhergehenden Ansprüche, wobei ein maximaler Durchmesser (9, 10) der Öffnungen (7, 8), gemessen an einer Oberfläche der Substrate (3, 4), welche jeweils vom anderen Substrat (3, 4) weg gewandt ist, von 1 mm bis 20 mm beträgt und/oder 20 bis 80% der Breite (11) der Überlappungsbereiche (5, 6) beträgt.

5. System (1') nach einem der vorhergehenden Ansprüche, wobei zumindest eine Öffnung (7, 8) einen Hinterschnitt hat, und wobei sich die Öffnung (7, 8) gegen eine Seite des Substrats (3, 4), welche dem Klebstoff zugewandt ist, verjüngt.

6. System (1') nach einem der vorhergehenden Ansprüche, wobei der Klebstoff (2, 2') zumindest eine Öffnung (7, 8) vollständig ausfüllt und/oder wobei der Klebstoff (2, 2') an einer Oberfläche zumindest eines Substrats (3, 4), welche vom anderen Substrat (3, 4) weg gewandt ist, die Öffnung (7, 8) überragt.

7. System (1') nach einem der vorhergehenden Ansprüche, wobei der erste ausgehärtete Teilbereich (12) des Klebstoffs (2') höchstens 30% des gesamten Klebstoffs (2, 2') beträgt.

8. System (1') nach einem der vorhergehenden Ansprüche, wobei die Substrate (3, 4) jeweils mehrere Öffnungen (7, 8) haben, wobei jeweils eine Öffnung (7, 8) im ersten Substrat (3) einer Öffnung (7, 8) im zweiten Substrat (4) zugeordnet ist.

9. System (1') nach einem der vorhergehenden Ansprüche, wobei der Klebstoff (2, 2') ein einkomponentiger Klebstoff auf Epoxidbasis oder auf Polyurethanbasis ist.

10. System (1') nach einem der vorhergehenden Ansprüche, wobei die Substrate (3, 4) aus Stahlblech und/oder aus Aluminiumblech und/oder aus Karbon gebildet sind.

11. System (1') nach einem der vorhergehenden Ansprüche, wobei die Substrate (3, 4) Bestandteile einer Karosserie, insbesondere einer Kraftfahrzeugkarosserie, sind.

12. Verfahren zur Vorfixierung zweier Substrate (3, 4), das Verfahren umfassend die Schritte:
Bereitstellen eines ersten Substrats (3) mit einer ersten Öffnung (7) in einem ersten Überlappungsbereich (5), eines zweiten Substrats (4) mit einer zweiten Öffnung (8) in einem zweiten Überlappungsbereich (6), und eines Klebstoffs (2);
Anordnen des Klebstoffs (2) zwischen den Überlappungsbereichen (5, 6) des ersten Substrats (3) und des zweiten Substrats (4), so dass der Klebstoff (2) sowohl die Substrate (3, 4) verbindet als auch zumindest teilweise in den Öffnungen (7, 8) angeordnet ist; und
lokales Aushärten des Klebstoffs (2) in einem Bereich der Öffnungen (7, 8), so dass ein ausgehärteter erster Teilbereich (12) des Klebstoffs (2') gebildet wird, welcher sich von der ersten Öffnung (7) bis in die zweite Öffnung (8) erstreckt, wobei ein zweiter Teilbereich (13) des Klebstoffs (2) unausgehärtet verbleibt.

13. Verfahren nach Anspruch 12, wobei beim Anordnen des Klebstoffs (2) der Klebstoff (2) zunächst auf einem Überlappungsbereich (5, 6) eines Substrats (3, 4) angeordnet wird, sodann das andere Substrat (3, 4) mit dessen Überlappungsbereich (5, 6) auf dem Klebstoff (2) angeordnet wird, und dann die beiden Substrate (3, 4) gegeneinander zubewegt werden, so dass der Klebstoff (2) zumindest teilweise in die Öffnungen (7, 8) gedrückt wird.

14. Verfahren nach Anspruch 12 oder 13, wobei beim lokalen Aushärten eine Hitze oder eine Strahlung im Bereich der Öffnungen (7, 8) angewendet wird.

15. Verfahren nach einem der Ansprüche 12 bis 14, wobei das Verfahren mit einem System (1, 1', 1") gemäss einem der Ansprüche 1 bis 11 durchgeführt wird.
